# EUROPEAN PATENT APPLICATION

(11) **EP 4 219 160 A1**
(43) Date of publication of application: **02.08.2023**
(21) Application number: 21871654.6
(22) Date of filing: 27.09.2021
(51) Int. Cl.: B32B 27/32, B32B 37/10, B32B 27/12, B32B 37/06, D06M 15/564, F41H 1/02, D06M 101/20, D06M 15/59, B32B 27/02, F41H 1/04

(54) **NANOFIBER COMPOSITE UNIDIRECTIONAL FABRIC, PREPARATION METHOD THEREFOR AND APPLICATION THEREOF**

(30) Priority: 28.09.2020 CN 202011039808; 28.09.2020 CN 202011041333
(71) Applicant: Sinochem High Performance Fiber Materials Co., Ltd, Yangzhou, Jiangsu 211999 (CN); Jiangsu Ruisheng Advanced Material Technology Co., Ltd, Yangzhou, Jiangsu 211999 (CN)
(72) Inventor: ZHANG, Liming, Yangzhou Chemical Industry Park Yizheng, Jiangsu 211999 (CN); CAO, Yutong, Yangzhou Chemical Industry Park Yizheng, Jiangsu 211999 (CN); SONG, Shubin, Yangzhou Chemical Industry Park Yizheng, Jiangsu 211999 (CN); ZHAO, Kairong, Yangzhou Chemical Industry Park Yizheng, Jiangsu 211999 (CN); CAO, Meirong, Yangzhou Chemical Industry Park Yizheng, Jiangsu 211999 (CN); SONG, Xiangyang, Yangzhou Chemical Industry Park Yizheng, Jiangsu 211999 (CN); ZHU, Junqiang, Yangzhou Chemical Industry Park Yizheng, Jiangsu 211999 (CN); WANG, Qian, Yangzhou Chemical Industry Park Yizheng, Jiangsu 211999 (CN)
(74) Representative: V.O.
(86) International application number: PCT/CN2021/120840
(87) International publication number: WO 2022/063285

(57) **Abstract**

Provided are a nanofiber composite unidirectional fabric and a preparation method therefor. The nanofiber composite unidirectional fabric according to the present invention comprises at least two unidirectional sheet layers and nanofibers located between adjacent unidirectional sheet layers. The unidirectional sheet layers each comprise unidirectionally arranged high-performance fibers and an adhesive, and the adhesive comprises nanofibers. The provided nanofiber composite unidirectional fabric has a novel composite structure, which integrates the comprehensive characteristics of fiber filaments, a resin matrix and nanofibers. The nanofiber composite unidirectional fabric of the present invention has excellent bulletproof performance and is suitable for novel bulletproof sheets.

## Description

### Technical field

The present disclosure belongs to the field of bulletproof protection, and specifically relates to nanofiber composite unidirectional fabrics, a preparation method thereof and their applications.

### Background

Composite materials are the main development direction of the current high-performance fiber industry, and fiber-reinforced resin-based composite materials are the current main trend of development. UD fabric (unidirectional fabric, also known as unidirectional textile or unidirectional cloth) is a new structured and functionalized composite material in the field of bulletproof protection. Usually composite materials are processed and formed by two or more materials. Not only the properties of the original components are retained after they are combined, but also special functions of the new materials are obtained.

UD fabric is a laminated composite material reinforced with continuous fiber. Usually, a unidirectional sheet layer is prepared by laminating and combining a prepreg composed of high-performance fibers in parallel arrangement and a resin matrix, then according to the laying design of the unidirectional sheet layer, lamination is performed in different fiber directions, and finally a composite fabric or composite sheet (that is, multi-directional sheet layer) is prepared by hot pressing molding. For the unidirectional sheet layer, the fibers are oriented in the same direction and are anisotropic. For the multi-directional sheet layer, a symmetrical laying design is usually adopted, that is, the fiber orientation of the layers on both sides of the median surface of the laminate is symmetrical, so the multi-directional sheet layer is also called an isotropic plate.

Ultra-high molecular weight polyethylene UD fabrics have excellent bulletproof performance. But because the macromolecular chain is easy to slip, when the bullet hits and does not penetrate, the ultra-high molecular weight polyethylene UD fabric creeps seriously, causing the product to be dented and resulting in damage to human bones or muscles. Aramid UD fabric is superior in terms of resistance of creep caused by bullet hitting on the material due to the presence of rigid chain segments. The development of a new UD fabric that can not only ensure bulletproof performance, but also reduce the dent of the bullet impact is a hot-spot in the industry.

Therefore, there is an urgent need in the art for a UD fabric with excellent bulletproof performance and dent resistance against bullet impact.

### Summary

The present disclosure provides a nanofiber composite UD fabric, which is a new type of composite structure integrating the comprehensive characteristics of fiber filaments, a thermoplastic resin and nanofibers. The nanofiber composite UD fabric of the present disclosure has excellent bulletproof properties and dent resistance against bullet impact, and is suitable for new bulletproof sheets, especially soft body armors and hard bulletproof inserts.

In particular, the present disclosure provides a nanofiber composite unidirectional fabric, which comprises at least two unidirectional sheet layers and nanofibers located between adjacent unidirectional sheet layers, wherein the unidirectional sheet layer comprises high-performance fibers in unidirectional arrangement and an adhesive, wherein the adhesive comprises nanofibers.

In one or more embodiments, the angle between the high-performance fiber arrangement directions of two adjacent unidirectional sheet layers is 90±10°.

In one or more embodiments, the mass of the high-performance fiber accounts for from 70% to 90% of the total mass of the nanofiber composite unidirectional fabric.

In one or more embodiments, the mass of the adhesive accounts for from 14.32% to 14.76% of the total mass of the nanofiber composite unidirectional fabric.

In one or more embodiments, the mass of the nanofibers located between adjacent unidirectional sheet layers accounts for from 0.24% to 0.68% of the total mass of the nanofiber composite unidirectional fabric.

In one or more embodiments, when the nanofiber composite unidirectional fabric comprises two unidirectional sheet layers, the areal density is from 70g/m² to 350g/m², preferably from 100g/m² to 300g/m², more preferably from 120g/m² to 250g/m².

In one or more embodiments, in the adhesive, the mass fraction of the nanofiber is from 5% to 50%, preferably from 5% to 30%, more preferably from 14% to 30% of the adhesive.

In one or more embodiments, the high-performance fiber is a fiber having a tensile strength greater than or equal to 20g/d, and an initial modulus greater than or equal to 40GPa.

In one or more embodiments, the high-performance fiber is one or more selected from the group consisting of ultra-high molecular weight polyethylene fibers, aramid fibers, polyimide fibers, and poly(p-phenylene benzobisoxazole) fibers.

In one or more embodiments, the high-performance fiber is an ultra-high molecular weight polyethylene fiber and/or an aramid fiber.

In one or more embodiments, the high-performance fiber is an ultra-high molecular weight polyethylene fiber and/or a para-aramid fiber.

In one or more embodiments, the high-performance fiber has a tensile strength of greater than or equal to 1.8GPa, an initial modulus of from 85GPa to 170GPa, and an elongation at break of greater than or equal to 3.5%.

In one or more embodiments, the nanofiber is an aramid nanofiber, preferably a para-aramid nanofiber.

In one or more embodiments, the nanofiber has a fiber length of from 50nm to 100nm, and a specific surface area of from 50m²/g to 500m²/g.

In one or more embodiments, the adhesive comprises a resin matrix, wherein the resin matrix is one or more selected from the group consisting of polyurethane, styrene block copolymer and polyacrylate.

In one or more embodiments, the resin matrix is a polyurethane.

In one or more embodiments, the resin matrix is a styrene block copolymer.

In one or more embodiments, the resin matrix is a styrene-isoprene-styrene block copolymer.

In one or more embodiments, the resin matrix has a tensile strength of from 15MPa to 40MPa.

In one or more embodiments, in the adhesive, the mass fraction of the resin matrix is from 30% to 80%, preferably from 40% to 80% of the adhesive.

In one or more embodiments, the mass ratio of the resin matrix and the nanofiber in the adhesive is 1: (0.1-1), preferably 1: (0.1-0.6).

In one or more embodiments, the adhesive further comprises an additive, preferably the mass fraction of the additive does not exceed 25% of the adhesive.

The present disclosure also provides a method for preparing a nanofiber composite unidirectional fabric. The method comprises the following steps:
(1) preparing a unidirectional sheet layer comprising high-performance fibers in unidirectional arrangement and an adhesive, wherein the adhesive comprises nanofibers;
(2) spraying an aqueous dispersion of nanofibers on the unidirectional sheet layer, drying, and then laminating the unidirectional sheet layers;
(3) hot pressing and combing the laminated unidirectional sheet layers to obtain a nanofiber composite unidirectional fabric.

The present disclosure also provides a method for preparing the nanofiber composite unidirectional fabric described in any embodiment of the present disclosure, which comprises the following steps:
(1) preparing a unidirectional sheet layer comprising high-performance fibers in unidirectional arrangement and an adhesive, wherein the adhesive comprises nanofibers;
(2) spraying an aqueous dispersion of the nanofiber on the unidirectional sheet layer, drying, and then laminating the unidirectional sheet layers;
(3) hot-pressing and combing the laminated unidirectional sheet layers to obtain a nanofiber composite unidirectional fabric.

In one or more embodiments, in step (1), an aqueous dispersion of the adhesive is adhered to high-performance fibers in unidirectional arrangement, and dried to obtain a unidirectional sheet layer.

In one or more embodiments, in the aqueous dispersion of the adhesive, the mass ratio of water to the solid component other than nanofibers is from 7:3 to 4:6, preferably from 7:3 to 5:5.

In one or more embodiments, the thickness of the aqueous dispersion of the adhesive adhered to the high-performance fibers in unidirectional arrangement is from 0.01mm to 0.1mm, preferably from 0.01mm to 0.05mm.

In one or more embodiments, in step (2), the aqueous dispersion of nanofibers is sprayed between two adjacent unidirectional sheet layers in an amount of from 1g/m² to 10g/m².

In one or more embodiments, in step (2), when laminating is performed, the angle between the high-performance fiber arrangement directions of two adjacent unidirectional sheet layers is 90±10°.

In one or more embodiments, in step (3), the hot-pressing temperature is from 70°C to 120°C, and the hot-pressing pressure is from 0.1MPa to 2MPa.

In one or more embodiments, the method has the following characteristics:
In step (1), an aqueous dispersion of the adhesive is adhered to high-performance fibers in unidirectional arrangement, and dried to obtain a unidirectional sheet layer, wherein the high-performance fiber is an ultra-high molecular weight polyethylene fiber, wherein the nanofiber is a para-aramid nanofiber, wherein in the aqueous dispersion of the adhesive, the mass fraction of the nanofiber is from 2% to 20%, preferably from 2% to 15%, and more preferably from 10% to 13%, of the aqueous dispersion of the adhesive, and the thickness of the aqueous dispersion of the adhesive adhered to the high-performance fibers in unidirectional arrangement is from 0.01mm to 0.05mm;
In step (2), an aqueous dispersion of nanofibers is sprayed between the adjacent two unidirectional sheet layers in a spraying amount of from 1g/m² to 5g/m², wherein in the aqueous dispersion of nanofibers, the mass fraction of the nanofiber is from 2% to 20%, preferably from 2% to 15%, and more preferably from 10% to 13%, of the aqueous dispersion of nanofibers, wherein when laminating is performed, the angle between the high-performance fiber arrangement directions of two adjacent unidirectional sheet layers is 90±10°; and
In step (3), the hot-pressing temperature is from 70°C to 120°C and the hot-pressing pressure is from 0.1MPa to 2MPa.

The present disclosure also provides a nanofiber composite unidirectional fabric prepared by the method according to any embodiment described herein.

The present disclosure also provides an aqueous dispersion of an adhesive comprising a resin matrix, nanofibers, water, and optional additives.

In one or more embodiments, in the aqueous dispersion of the adhesive, the mass ratio of water to the solid component other than nanofibers is from 7:3 to 4:6, preferably from 7:3 to 5:5.

In one or more embodiments, the resin matrix is one or more selected from the group consisting of polyurethanes, styrene block copolymers and polyacrylates, preferably a polyurethane or preferably a styrene block copolymer.

In one or more embodiments, the resin matrix is a styrene-isoprene-styrene block copolymer.

In one or more embodiments, the resin matrix has a tensile strength of from 15MPa to 40MPa.

In one or more embodiments, in the aqueous dispersion of the adhesive, the mass fraction of the resin matrix is from 30% to 80%, preferably from 40% to 80% of the solid component in the aqueous dispersion of the adhesive.

In one or more embodiments, the nanofiber is an aramid nanofiber, preferably a para-aramid nanofiber.

In one or more embodiments, the nanofiber has a fiber length of from 50nm to100nm, and a specific surface area of 50m²/g to 500m²/g.

In one or more embodiments, in the aqueous dispersion of the adhesive, the mass fraction of the nanofibers is from 5% to 50%, preferably from 5% to 30%, more preferably from 14% to 30% of the solid component in the aqueous dispersion of the adhesive.

In one or more embodiments, in the aqueous dispersion of the adhesive, the mass ratio of the resin matrix and the nanofibers is 1: (0.1-1), preferably 1: (0.1-0.6).

In one or more embodiments, in the aqueous dispersion of the adhesive, the mass fraction of the additive does not exceed 25% of the solid component in the aqueous dispersion of the adhesive.

The present disclosure also provides use of the aqueous dispersion of the adhesive according to any embodiment of the present disclosure in the preparation of a unidirectional fabric or the enhancement of the bulletproof performance of a unidirectional fabric.

The present disclosure also provides a method for preparing a unidirectional fabric or improving bulletproof performance of a unidirectional fabric, which comprises preparing the unidirectional fabric with the aqueous dispersion of the adhesive according to any embodiment of the present disclosure.

The present disclosure also provides use of an aqueous dispersion of nanofibers in the preparation of a unidirectional fabric or the enhancement of the bulletproof performance of a unidirectional fabric.

The present disclosure also provides a method for preparing a unidirectional fabric or improving bulletproof performance of a unidirectional fabric, which comprises preparing the unidirectional fabric with the aqueous dispersion of nanofibers according to any embodiment of the present disclosure.

In one or more embodiments, the nanofiber is an aramid nanofiber, preferably a para-aramid nanofiber.

In one or more embodiments, the nanofiber has a fiber length of from 50nm to100nm, and a specific surface area of from 50m²/g to 500m²/g.

In one or more embodiments, in the aqueous dispersion of nanofibers, the mass fraction of nanofibers is from 2% to 20%, preferably from 2% to 15%, more preferably from 10% to 13% of the aqueous dispersion of nanofibers.

The present disclosure also provides a bulletproof article prepared by the nanofiber composite unidirectional fabric according to any embodiment of the present disclosure; preferably, the bulletproof article comprises a body armor, a bulletproof insert and a bulletproof helmet.

The present disclosure also provides a bulletproof article comprising the nanofiber composite unidirectional fabric according to any embodiment of the present disclosure; preferably, the bulletproof article comprises a body armor, a bulletproof insert and a bulletproof helmet.

The present disclosure also provides a unidirectional sheet layer, which comprises high-performance fibers in unidirectional arrangement and an adhesive, wherein the adhesive comprises nanofibers, wherein there are nanofibers on the surface of the unidirectional sheet layer.

In one or more embodiments, the high-performance fibers, the adhesive or the nanofibers in the unidirectional sheet layer are according to any embodiment as described herein.

The present disclosure also provides a method for preparing a unidirectional sheet layer, which comprises the following steps:
(1) preparing a unidirectional sheet layer comprising high-performance fibers in unidirectional arrangement and an adhesive, wherein the adhesive comprises nanofibers;
(2) spraying an aqueous dispersion of nanofibers on the unidirectional sheet layer and drying.

In one or more embodiments, the step (1) in the method for preparing a unidirectional sheet layer is as described in the step (1) of the preparation of the nanofiber composite unidirectional fabric in any embodiment of the present disclosure.

In one or more embodiments, the step (2) in the method for preparing a unidirectional sheet layer is as described in the step (2) of the preparation of the nanofiber composite unidirectional fabric in any embodiment of the present disclosure.

The present disclosure also provides a unidirectional sheet layer prepared by the method according to any embodiment of the present disclosure. Preferably, the unidirectional sheet layer is the unidirectional sheet layer according to any embodiment of the present disclosure.

### Brief description of figures

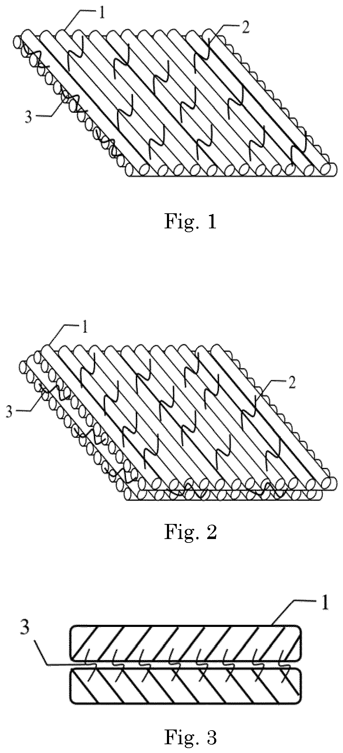

Fig. 1 is a schematic diagram of the structure of nanofiber composite UD fabric of the present disclosure comprising two unidirectional sheet layers, wherein the two unidirectional sheet layers form a structure with 0°/90° arrangement, wherein 1 is high-performance fibers, 2 is nanofibers in the adhesive, and 3 is nanofibers between the unidirectional sheet layers.
Fig. 2 is a schematic diagram of the structure of nanofiber composite UD fabric of the present disclosure comprising four unidirectional sheet layers, wherein the four unidirectional sheet layers form a structure with 0°/90°/0°/90° arrangement, wherein 1 is high-performance fibers, 2 is nanofibers in the adhesive, and 3 is nanofibers between the unidirectional sheet layers.
Fig. 3 is a schematic diagram of the interlayer structure of nanofiber composite UD fabric of the present disclosure comprising two unidirectional sheet layers. Not only the bonding effect of the adhesive but also the connection effect of dispersed nanofibers is present between the unidirectional sheet layers. 1 is the unidirectional sheet layer, and 3 is nanofibers between the unidirectional sheet layers.

### Detailed description

In order to enable those skilled in the art to understand the features and effects of the present disclosure, the following is only a general description and definition of the terms and phrases mentioned in the specification and claims. Unless otherwise indicated, all technical and scientific words and terms used herein are in the ordinary meaning of the present disclosure understood by those of those skilled in the art, and in the event of a conflict, the definitions of this specification shall prevail.

The theory or mechanism described and disclosed herein, whether right or wrong, should not in any way limit the scope of the disclosure, i.e., the content of the disclosure may be implemented without being limited by any particular theory or mechanism.

In the present disclosure, all features defined in the form of a range of numbers or percentages such as values, quantities, contents and concentrations are for brevity and convenience only. Accordingly, the description of ranges of values or percentages shall be deemed to have covered and specifically disclosed all possible sub-ranges and individual values (including integers and fractions) within the range.

In the present disclosure, unless otherwise specified, the ratio refers to the mass ratio, and the percentage content refers to the mass percentage content.

In the present disclosure, unless otherwise specified, the terms "comprising", "including", "containing" or similar expressions cover the meaning of "consisted of" and "mainly composed of... ".

In the present disclosure, for the sake of conciseness, not all possible combinations of each technical feature in each embodiment or example are described. Thus, as long as there is no contradiction in the combination of these technical features, each technical feature in each embodiment or example may be arbitrarily combined, and all possible combinations should be considered to be within the scope of the specification.

The present disclosure provides a nanofiber composite UD fabric, which comprises at least two unidirectional sheet layers and nanofibers between adjacent unidirectional sheet layers, wherein the unidirectional sheet layer comprises high-performance fibers in unidirectional arrangement and an adhesive, wherein the adhesive comprises nanofibers.

In the present disclosure, high-performance fibers refer to fibers having a tensile strength of greater than or equal to 20g/d and an initial modulus of greater than or equal to 40GPa. Unless otherwise specified, the tensile strength, initial modulus, and elongation at break of fibers refer to the tensile strength, initial modulus, and elongation at break measured in accordance with ASTM D885. It should be understood that the high-performance fiber in the unidirectional sheet layer of the nanofiber composite UD fabric of the present disclosure refers to the high-performance fiber filament. High-performance fibers suitable for the present disclosure may be high-performance fibers commonly used in the art for the preparation of UD fabrics, for example including aramid fibers, ultra-high molecular weight polyethylene fibers, polyimide fibers and poly(p-phenylene benzobisoxazole) fibers, preferably one or two of aramid fibers and ultra-high molecular weight polyethylene fibers. In the present disclosure, aramid fibers refer to fibers made of polyamide with at least 85% of the amide group (-CONH-) on the molecular chain directly attached to two benzene rings. Aramid fibers may be fibers of polyamides obtained by polymerization of monomers comprising one or more aromatic diamines and one or more aromatic diacids, preferably polyamide fibers obtained by polymerization of one or more aromatic diamines and one or more aromatic diacids, for example, including but not limited to poly(p-phenylene terephthalamide) fiber (i.e., para-aramid fiber), poly(m-phenylene isophthalamide) fiber (i.e., meta-aramid fiber), heterocyclic aramid fiber and copolymerized aramid fiber. In the present disclosure, the ultra-high molecular weight polyethylene fiber refers to a fiber made of linear polyethylene having a viscosity-average molecular weight of more than or equal to 1.5 million with substantially no branch.

In the nanofiber composite UD fabric of the present disclosure, preferably, there is a certain angle between the high-performance fiber arrangement directions of two adjacent unidirectional sheet layers. The angle can be, for example, 30°-150°, i.e. two adjacent unidirectional sheet layers can form a structure with 0°/(30°-150°) arrangement. In a preferred embodiment, the angle between the high-performance fiber arrangement directions of two adjacent unidirectional sheet layers is 90±10°, e.g., 90±5°, 90°.

The nanofiber composite UD fabric of the present disclosure may include an odd or even number greater than 1 of unidirectional sheet layers, such as 2, 4, 6, 8 unidirectional sheet layers. In some embodiments, as shown in Figs. 1 and 2, the nanofiber composite UD fabric of the present disclosure comprises 2 or 4 unidirectional sheet layers. When the nanofiber composite UD fabric of the present disclosure comprises multiple unidirectional sheet layers, each unidirectional sheet layer may be the same or different, for example, each unidirectional sheet layer may contain the same or different high-performance fibers.

The nanofiber composite UD fabric of the present disclosure is a new type of composite structure which integrates the comprehensive characteristics of fiber filaments, a resin matrix and nanofibers. High-performance fibers in the unidirectional sheet layer absorb external forces mainly through fiber tensile deformation. Highly dispersed nanofibers and the resin matrix in the unidirectional sheet layer are used for adhesion between single layers of yarns and provide gripping force between yarns. The nanofibers between unidirectional sheet layers serve as interlayer connection sites and provide physical cross-linking points between unidirectional sheet layers. The nanofibers and the resin matrix together constitute the reinforced and toughened structure of the nanofiber-composite UD fabric.

In the nanofiber composite UD fabric of the present disclosure, the mass of high-performance fibers accounts for from 70% to 90%, preferably from 80% to 90%, such as from 83% to 87%, from 84% to 86%, 85% of the total mass of the UD fabric. In the nanofiber composite UD fabric of the present disclosure, the total mass of the adhesive and the nanofibers between adjacent unidirectional sheet layers accounts for from 10% to 30%, preferably from 10% to 20%, such as from 13% to 17%, from 14% to 16%, 15% of the total mass of the UD fabric. In the nanofiber composite UD fabric of the present disclosure, the mass of the adhesive accounts for from 10% to 29.9%, preferably from 10% to 19.9%, such as 13%, 14%, 14.32%, 14.41%, 14.49%, 14.53%, 14.62%, 14.64%, 14.76%, 14.8%, 15% of the total mass of the UD fabric. In the nanofiber composite UD fabric of the present disclosure, the mass of nanofibers between adjacent unidirectional sheet layers accounts for from 0.1% to 5%, preferably from 0.1% to 2%, such as 0.2%, 0.24%, 0.36%, 0.38%, 0.47%, 0.51%, 0.59%, 0.68%, 0.7%, 1% of the total mass of the UD fabric. In the present disclosure, in the calculation of mass or amount, "nanofibers between adjacent unidirectional sheet layers" refers to nanofibers other than nanofibers in the adhesive comprised in the UD fabric. In some embodiments, the mass of "nanofibers between adjacent unidirectional sheet layers" refers to the mass of nanofibers applied to the unidirectional sheet layers by spraying an aqueous dispersion of aramid nanofibers.

In the unidirectional sheet layer of the present disclosure, the amount of the high-performance fibers, the total amount of the adhesive and the nanofibers on the surface of the unidirectional sheet layer, the amount of the adhesive, and the amount of the nanofibers on the surface of the unidirectional sheet layer are the same as the amount of the high-performance fibers, the total amount of the adhesive and the nanofibers between adjacent unidirectional sheet layers, the amount of the adhesive, and the amount of nanofibers between adjacent unidirectional sheet layers in the nanofiber composite UD fabric as aforementioned, respectively. In the present disclosure, in the calculation of mass or amount, "nanofibers on the surface of the unidirectional sheet layer" refers to nanofibers other than nanofibers in the adhesive comprised in the unidirectional sheet layer. In some embodiments, the mass of "nanofibers on the surface of the unidirectional sheet layer" refers to the mass of nanofibers applied to the unidirectional sheet layer by spraying an aqueous dispersion of aramid nanofibers.

When the nanofiber composite UD fabric of the present disclosure contains two unidirectional sheet layers, the areal density is from 70g/m² to 350g/m², preferably from 100g/m² to 300g/m², and further preferably from 120g/m² to 250g/m².

In the nanofiber composite UD fabric of the present disclosure, the high-performance fiber may be one or more selected from the group consisting of ultra-high molecular weight polyethylene fibers, aramid fibers, polyimide fibers and poly(p-phenylene benzobisoxazole) fibers. The aramid fiber is preferably one or more selected from the group consisting of para-aramid fibers and heterocyclic aramid fibers. The high-performance fiber suitable for the present disclosure is preferably one or two selected from the group consisting of ultra-high molecular weight polyethylene fibers and aramid fibers, and more preferably one or two selected from the group consisting of ultra-high molecular weight polyethylene fibers and para-aramid fibers. It is found in the present disclosure that the use of ultra-high molecular weight polyethylene fiber or aramid fiber in the nanofiber composite UD fabric of the present disclosure can provide the UD fabric better bulletproof performance.

The tensile strength of the high-performance fibers suitable for the present disclosure is preferably greater than or equal to 1.8GPa, such as from 2.5GPa to 5GPa, ≥23g/d, >_25g/d, >_26g/d, the initial modulus is preferably from 85GPa to 170GPa, and the elongation at break is preferably greater than or equal to 3.5%. Thus, in a preferred embodiment, a high-performance fiber having a tensile strength greater than or equal to 1.8GPa, an initial modulus of from 85GPa to 170GPa, and an elongation at break of greater than or equal to 3.5% are adopted in the present disclosure. In a preferred embodiment, in the nanofiber composite UD fabric of the present disclosure, the high-performance fiber is an ultra-high molecular weight polyethylene fiber having a tensile strength of from 2.5GPa to 5GPa, an initial modulus of from 85GPa to 170GPa, and an elongation at break greater than or equal to 3.5%, or an aramid fiber, preferably para-aramid fiber having a tensile strength of ≥23g/d, preferably ≥ 25g/d, more preferably ≥26g/d, an initial modulus of from 85GPa to 170GPa, and an elongation at break greater than or equal to 3.5%.

The nanofibers suitable for the present disclosure are preferably aramid nanofibers. Aramid nanofibers can be one or two selected from the group consisting of para-aramid nanofibers and heterocyclic aramid nanofibers. Preferably, the nanofibers are para-aramid nanofibers. It is found in the present disclosure that aramid nanofibers having rigid segments are not easy to cause longitudinal slippage between molecular chains and can effectively play the role of connecting unidirectional sheet layers, so that the nanofiber composite UD fabric comprising aramid nanofibers has better bulletproof performance, especially lower BFS value.

The fiber length of the nanofibers suitable for the present disclosure is preferably from 50nm to 100nm, and the specific surface area is preferably from 50m²/g to 500m²/g, such as from 200m²/g to 250m²/g. In a preferred embodiment, in the nanofiber composite UD fabric of the present disclosure, the nanofiber is aramid nanofiber, preferably para-aramid nanofiber, having a fiber length of from 50nm to 100nm and a specific surface area of from 50m²/g to 500m²/g.

It can be understood by those skilled in the art that the adhesive in the nanofiber composite UD fabric of the present disclosure is the solid component of the aqueous dispersion of the adhesive used in the preparation of the UD fabric. In the preparation of the UD fabric, the solvent in the aqueous dispersion of the adhesive adhering to the fiber filament is removed, and the solid component of the aqueous dispersion of the adhesive is retained in the UD fabric. The adhesive in UD fabric generally includes a resin matrix. In the adhesive of the nanofiber composite UD fabric of the present disclosure, the mass fraction of the resin matrix is typically from 30% to 80% of the adhesive.

The resin matrix suitable for the present disclosure is typically a thermoplastic resin. The thermoplastic resin is preferably one or more selected from the group consisting of polyurethane, styrene block copolymer and polyacrylate, more preferably polyurethane or styrene block copolymer. Polyurethane resin has good low-temperature compliance, excellent mechanical properties and impact resistance. The adhesive comprising polyurethane as the resin matrix has good viscoelasticity and bonding strength. Styrene block copolymer suitable for the present disclosure is a polymer obtained by copolymerization of styrene with other olefin monomers (e.g., aliphatic olefin monomers), preferably a polymer obtained by copolymerization of styrene with one or more olefin monomers selected from the group consisting of butadiene, isoprene, ethylene, butene and propylene, including but not limited to styrene-butadiene-styrene block copolymer (SBS), styrene-isoprene-styrene block copolymer (SIS), styrene-ethylene/butene-styrene block copolymer (SEBS) and styrene-ethylene/propylene-styrene block copolymer (SEPS). In some embodiments, the resin matrix is SIS. Preferably, the mass fraction of the polystyrene segment in SIS is 15±5%, and the mass fraction of the polyisoprene segment in SIS is 85±5%. Adhesives comprising styrene block copolymer as the resin matrix can impart good softness to the nanofiber composite UD fabric while satisfying protective properties. The tensile strength of the resin matrix suitable for the present disclosure is preferably from 15MPa to 40MPa, such as from 15MPa to 25MPa, from 20MPa to 30MPa. In a preferred embodiment, in the nanofiber composite UD fabric of the present disclosure, the resin matrix is polyurethane having a tensile strength of from 15MPa to 40MPa, preferably from 20MPa to 30MPa. In other preferred embodiments, in the nanofiber composite UD fabric of the present disclosure, the resin matrix is styrene block copolymer (e.g., SIS) having a tensile strength of from 15MPa to 40MPa, preferably from 15MPa to 25MPa. In a preferred embodiment, in the adhesive of the nanofiber composite UD fabric of the present disclosure, the mass fraction of the resin matrix is from 40% to 80%, such as from 50% to 70%, from 55% to 65%, from 55% to 60% of the adhesive.

One of the characteristics of the nanofiber composite UD fabric of the present disclosure is that the adhesive further comprises nanofibers. Nanofibers suitable for the adhesives are as described previously. In the adhesive of the nanofiber composite UD fabric of the present disclosure, the mass fraction of the nanofiber is usually from 5% to 50%, preferably from 5% to 30%, such as from 9% to 30%, from 14% to 30%, from 14% to 25%, from 24% to 26%, 9.1%, 14.9%, 19.2%, 20%, 24.5%, 28.6% of the adhesive. In a preferred embodiment, in the adhesive, the mass ratio of the resin matrix and the nanofibers is 1: (0.1-1), preferably 1: (0.1-0.6), more preferably 1: (0.2-0.45), e.g., 1: (0.3-0.45), 1: (0.4-0.45).

In some embodiments, the adhesive of the nanofiber composite UD fabric of the present disclosure further comprises an additive. In the present disclosure, the additive in the adhesive is that commonly used in the art for an aqueous dispersion of an adhesive. For example, in an embodiment in which the resin matrix is polyurethane, the additive is that commonly used in polyurethane emulsions. Additives in adhesives may include one or more selected from the group consisting of emulsifiers, tackifiers, pH adjusters, defoamers, and antioxidants. If present, each amount of emulsifiers, tackifiers, pH adjusters, defoamers and antioxidants in the adhesive may be conventional in the art. When the additive is comprised in the adhesive, the mass fraction of the additive usually does not exceed 30% of the adhesive, preferably not more than 25%, such as from 15% to 25%. When the additive is comprised in the adhesive, the mass ratio of the resin matrix and the additive in the adhesive is usually 2:1 to 5:1, preferably 2:1 to 4:1, such as from 2.5:1 to 3.5:1, 3:1.

In the nanofiber composite UD fabric of the present disclosure, the nanofibers between adjacent unidirectional sheet layers may be the same as or different from the nanofibers in the adhesive. In some embodiments, the nanofibers between adjacent unidirectional sheet layers and the nanofibers in the adhesive are the same nanofibers. In the nanofiber composite UD fabric of the present disclosure, the nanofibers between adjacent unidirectional sheet layers are derived from the aqueous dispersion of nanofibers sprayed on the unidirectional sheet layer in the preparation of the nanofiber composite UD fabric of the present disclosure. In the present disclosure, the areal density of nanofibers between adjacent two unidirectional sheet layers is from 0.05g/m² to 2.5g/m², preferably from 0.1g/m² to 1g/m², more preferably from 0.3g/m² to 0.5g/m², e.g., 0.15 g/m², 0.26 g/m², 0.36 g/m², 0.4 g/m², 0.46 g/m², 0.5 g/m², 0.5 g/m², 0.55 g/m².

The nanofiber composite UD fabric of the present disclosure can be prepared by the following steps:
(1) preparing a unidirectional sheet layer comprising high-performance fibers in unidirectional arrangement and an adhesive, wherein the adhesive comprises nanofibers;
(2) spraying an aqueous dispersion of nanofibers on the unidirectional sheet layer uniformly, drying, and then laminating the unidirectional sheet layers;
(3) hot-pressing and combining the laminated unidirectional sheet layers to obtain the nanofiber composite UD fabric.

In step (1), a method known in the art may be used to prepare the unidirectional sheet layer. For example, an aqueous dispersion of the adhesive is uniformly adhered to high-performance fibers and dried to obtain a unidirectional sheet layer. The present disclosure is characterized in that the adhesive comprises nanofibers, i.e., the aqueous dispersion of the adhesive used in the preparation of the unidirectional sheet layer is an aqueous dispersion of the adhesive comprising nanofibers.

In some embodiments, the step (1) comprises: adhering the aqueous dispersion of the adhesive uniformly to the high-performance fibers in unidirectional arrangement, and drying the high-performance fibers with the aqueous dispersion of the adhesive adhered thereto to obtain a unidirectional sheet layer. In some embodiments, the aqueous dispersion of the adhesive is adhered to high-performance fibers in unidirectional arrangement by the way of impregnating the high-performance fibers in the aqueous dispersion of the adhesive. The aqueous dispersion of the adhesive is formed by dispersing the components of the aforementioned adhesive in water. That is, the aqueous dispersion of the adhesive comprises a resin matrix, nanofibers and water, and optionally or preferably, further comprises an additive. The proportion of each solid component in the aqueous dispersion of the adhesive is the same as that of each component in the adhesive as aforementioned. The solid content in the aqueous dispersion of the adhesive is typically from 30% to 60%, preferably from 40% to 50%, such as 42.3%, 43.9%, 45.5%, 46.9%, 49.5%. Water suitable for the present disclosure is preferably deionized water. In the aqueous dispersion of the adhesive, the mass ratio of water to the solid component other than nanofibers is typically from 7:3 to 4:6, preferably from 7:3 to 5:5, more preferably from 6.5:3.5 to 5.5:4.5, e.g., 6:4. In the aqueous dispersion of the adhesive, the mass fraction of nanofibers is usually from 2% to 20%, preferably from 3%to 15%, such as 3.8%, 6.5%, 9.1%, 11.5%, 13.8%, more preferably from 5% to 15%, such as from 9% to 13%, from 10% to 13%, from 9% to 12%, from 11% to 12% of the aqueous dispersion of the adhesive. In some embodiments, an aqueous dispersion of an adhesive comprising nanofibers is obtained by dispersing nanofibers in the aqueous dispersion of the adhesive that does not contain nanofibers. The aqueous dispersion of the adhesive that does not contain nanofibers can be self-formulated or commercially available. For example, when the resin matrix in the adhesive is polyurethane, the aqueous dispersion of the adhesive that does not contain nanofibers can be a commercially available polyurethane emulsion, such as a polyurethane emulsion with the trade name of WB8139 from Henkel. As another example, when the resin matrix in the adhesive is a styrene block copolymer, the aqueous dispersion of the adhesive that does not contain nanofibers can be a commercially available styrene block copolymer emulsion, such as SIS emulsion with the trade name of B7137 from Henkel. The aqueous dispersion of the adhesive adhered to the high-performance fibers forms an adhesive film on the surface of the high-performance fibers. In the present disclosure, the thickness of the adhesive film is preferably from 0.01mm to 0.1mm, more preferably from 0.01mm to 0.05mm, such as from 0.02mm to 0.04mm, from 0.025mm to 0.035mm, 0.03mm. The method of controlling the amount of impregnation (adhesive film thickness) in the present disclosure may be various methods known in the art for controlling the amount of impregnation. When the aqueous dispersion of the adhesive is adhered by impregnation, the temperature is usually controlled to be from room temperature to 90°C. When the high-performance fibers with the aqueous dispersion of the adhesive adhered thereto are dried, the drying temperature and time shall be selected so that the water in the aqueous dispersion of the adhesive adhered to the high-performance fibers is evaporated.

In the aqueous dispersion of the adhesive of the present disclosure, the nanofibers are highly dispersed in the aqueous dispersion. The mass of the nanofibers typically accounts for from 2% to 20%, preferably from 2% to 15%, from 3% to 15%, such as 3.8%, 6.5%, 9.1%, 11.5%, 13.8%, more preferably from 5% to 15%, such as from 9% to 13%, from 10% to 13%, from 9% to 12%, from 11% to 12% of the total mass of the aqueous dispersion of the adhesive. It is found in the present application that, when the content of nanofibers in the aqueous dispersion of the adhesive comprising the nanofibers is controlled at from 2% to 20%, the nanofiber composite UD fabric with improved bulletproof performance can be prepared. In particular, when the nanofiber content is further controlled at from 5% to 15%, the nanofiber composite UD fabric having a significantly reduced BFS value can be prepared. In a preferred embodiment, step (1) comprises: the high-performance fibers are spread onto a roller with prepreg treatment through an adhesive tank filled with an aqueous dispersion of an adhesive containing nanofibers and dried to obtain a unidirectional sheet layer. In some embodiments, a single-roll arranger is used to spread the high-performance fibers onto the roller. The method of prepreg treatment is known to those skilled in the art. It is usually performed by immersing the bottom of the roller in the adhesive tank, rotating the roller to complete the adhesive impregnation of high-performance fibers, followed by the scraping treatment.

In step (2), the aqueous dispersion of nanofibers is formed by dispersing the nanofibers in water. In the aqueous dispersion of nanofibers of the present disclosure, the nanofibers are highly dispersed in water. The mass of nanofibers usually accounts for from 2% to 20%, preferably from 2% to 15%, from 3% to 15%, such as 3.8%, 6.5%, 9.1%, 11.5%, 13.8%, more preferably from 5% to 15%, such as from 9% to 13%, from 10% to 13%, from 9% to 12%, from 11% to 12% of the total mass of the aqueous dispersion of nanofibers. It is found in the present disclosure that, when the nanofiber content in the aqueous dispersion of nanofibers is controlled at from 2% to 20%, the nanofiber composite UD fabric having improved bulletproof performance can be prepared. In particular, when the nanofiber content is further controlled at from 5% to 15%, the nanofiber composite UD fabric having a significantly reduced BFS value can be prepared. It is found in the present disclosure that, because the aqueous dispersion of the adhesive containing nanofibers has a certain viscosity, it cannot be applied to the unidirectional sheet layer by spraying. In addition, if the nanofibers are dispersed in the aqueous dispersion of the adhesive as a binder between the unidirectional sheet layers, not only the areal density of UD articles but also the hardness of UD articles increases, such that the UD articles cannot possess a "light and soft" effect. Therefore, in the present disclosure, the aqueous dispersion of nanofibers is sprayed to the unidirectional sheet layers, so that the nanofibers form connection sites between the unidirectional sheet layers. In the present disclosure, the amount of the aqueous dispersion of nanofibers spayed between unidirectional sheet layers is from 1g/m² to 10g/m², preferably from 1g/m² to 5g/m², for example, 4g/m². It should be understood that in the present disclosure, the aqueous dispersion of nanofibers is typically sprayed on one surface of a unidirectional sheet layer to be laminated, and then a surface of another unidirectional sheet layer that is not sprayed with the aqueous dispersion of nanofibers is attached to the surface that is sprayed with the aqueous dispersion of nanofibers. When the unidirectional sheet layer sprayed with the aqueous dispersion of nanofibers is dried, the drying temperature and time should be selected such that the water in the aqueous dispersion of nanofibers adhered to the unidirectional sheet layer is evaporated. In step (2), during lamination, there is preferably a certain angle between the high-performance fiber arrangement directions of two adjacent unidirectional sheet layers. For example, the angle may be from 30° to 150°, preferably 90±10°. During lamination, the angles between two adjacent unidirectional sheet layers can be the same or different. In some embodiments, the angles between two adjacent unidirectional sheet layers are the same, for example, all of the angles are 60±10° or 90±10°.

In step (3), the hot-pressing and combining temperature is preferably from 70°C to 120°C. The hot-pressing pressure is preferably from 0.1MPa to 2MPa.

In a preferred embodiment, the method for preparing a nanofiber composite aramid UD fabric of the present disclosure comprises the following steps:
(1) high-performance fibers are spread on a roller with prepreg treatment through an adhesive tank filled with an aqueous dispersion of an adhesive containing nanofibers and dried to obtain a unidirectional sheet layer, wherein the thickness of the adhesive film is preferably from 0.01mm to 0.1mm, more preferably from 0.01mm to 0.05mm;
(2) the aqueous dispersion of nanofibers is sprayed on the unidirectional sheet layer with an amount of the aqueous dispersion of nanofibers sprayed between the unidirectional sheet layers of preferably from 1g/m² to 10g/m² and dried, and then the unidirectional sheet layers are laminated; preferably there is a certain angle between the high-performance fiber arrangement directions of adjacent two unidirectional sheet layers, and the angle is preferably 90±10°;
(3) the laminated unidirectional sheet layers are hot-pressed and combined to obtain the nanofiber-composite UD fabric, wherein the hot-pressing and combining temperature is preferably from 70°C to 120°C and the hot-pressing pressure is preferably from 0.1MPa to 2MPa.

It is found in the present disclosure that the use of an aqueous dispersion of an adhesive containing nanofibers can prepare a UD fabric with excellent bulletproof performance. Thus, the present disclosure involves an aqueous dispersion of an adhesive comprising a resin matrix, nanofibers and water, optionally or preferably further comprising an additive. Additives include one or more selected from the group consisting of emulsifiers, tackifiers, defoamers, antioxidants and pH adjusters. In a preferred embodiment, the aqueous dispersion of the adhesive of the present disclosure comprises a resin matrix, nanofibers and water, optionally or preferably further comprises one or more selected from the group consisting of emulsifiers, tackifiers, defoamers, antioxidants and pH adjusters. In the aqueous dispersion of the adhesive of the present disclosure, the mass ratio of water and the solid component other than nanofibers is typically from 7:3 to 4:6, preferably from 7:3 to 5:5, more preferably from 6.5:3.5 to 5.5:4.5, e.g., 6:4. The ratio of each solid component in the aqueous dispersion of the adhesive according to the present disclosure is as described with respect to the ratio of each component in the aforementioned adhesive. The solid content of the aqueous dispersion of the adhesive according to the present disclosure is typically from 30% to 60%, preferably from 40% to 50%, such as 42.3%, 43.9%, 45.5%, 46.9%, 49.5%. In the aqueous dispersion of the adhesive according to the present disclosure, the mass fraction of nanofibers in the aqueous dispersion of the adhesive is typically from 2% to 20%, preferably from 2% to 15%, from 3% to 15%, such as 3.8%, 6.5%, 9.1%, 11.5%, 13.8%, more preferably from 5% to 15%, such as from 9% to 13%, from 10% to 13%, from 9% to 12%, from 11% to 12%. The present disclosure also involves use of the aqueous dispersion of the adhesive according to the present disclosure in the preparation of the UD fabric or enhancing bulletproof performance of the UD fabric. In the present disclosure, the enhancement of bulletproof performance refers to an increase in V50 value and/or a reduction in BFS value under the bulletproof standard NIJ0101.06.

It is found in the present disclosure that the use of the aqueous dispersion of nanofibers can provide a UD fabric with excellent bulletproof performance. The mass of nanofibers typically accounts for from 2% to 20%, preferably from 3% to 15%, such as 3.8%, 6.5%, 9.1%, 11.5%, 13.8%, more preferably from 5% to 15%, such as from 9% to 13%, from 10% to 13%, from 9% to 12%, from 11% to12% of the total mass of the aqueous dispersion of nanofibers. The present disclosure also involves use of the aqueous dispersion of nanofibers according to the present disclosure in the preparation of the UD fabric or enhancing bulletproof performance of the UD fabric.

The present disclosure involves use of the nanofiber composite UD fabric for bulletproof sheets. A bulletproof sheet, for example, may be a UD fabric comprising multiple unidirectional sheet layers, which may be obtained by laminating by UD fabrics having a single layer, or obtained by further laminating by UD fabrics comprising multiple layers. The bulletproof sheet of the present disclosure may be used for body armors, bulletproof inserts and bulletproof helmets. The present disclosure further comprises bulletproof articles prepared from aramid UD fabrics of the present disclosure. Bulletproof articles include body armors, bulletproof inserts and bulletproof helmets. Bulletproof inserts include personal bulletproof inserts and automotive bulletproof inserts. The nanofiber composite UD fabric of the present disclosure may be prepared into bulletproof articles by the method known in the art. For example, the nanofiber composite UD fabric of the present disclosure can be cut, laminated, combined and molded to prepare a bulletproof article.

The technical solution of the present disclosure has the following advantages:
The method of preparing the nanofiber composite UD fabric of the present disclosure is safe and environmentally friendly. The aqueous system used in the method is harmless to human body and the environment. Nanofibers having a high specific surface area can be stably dispersed in the aqueous system. After the hot-pressing process, the nanofibers in the adhesive can be uniformly dispersed in the two-phase interface of high-performance fibers and adhesives, providing a gripping force between yarns. Nanofibers sprayed between unidirectional sheet layers as interlayer connection sites provide physical cross-linking points between unidirectional sheet layers. The nanofiber composite UD fabric of the present disclosure has not only excellent bulletproof performance, but also low cost and production difficulty, providing a good economy. When the nanofiber composite UD fabric of the present disclosure is used for bulletproof articles, it can effectively improve impact resistance against shrapnel and provide higher safety. The weight of the article does not increase significantly and the article has softness with good comfortability.

The present disclosure is comprehensively described by the following Examples, but these Examples are only used to illustrate the present disclosure and are not intended to limit the scope of the present disclosure. The protection scope of the present disclosure is limited only by the claims. Any omission, substitution or modification made by those skilled in the art based on the embodiments disclosed herein will fall within the protection scope of the present disclosure.

Conventional instruments and apparatus in the art were used in the following Examples. In the following examples, the experimental methods without specific conditions indicated were generally performed according to the common conditions, or according to the conditions recommended by the manufacturer. Various materials and reagents used in the following examples, unless otherwise noted, were conventional commercially available products with specifications that were commonly used in the art. In the description of the present disclosure and the following Examples, unless otherwise specified, "%" indicates a weight percentage, "parts" indicates parts by weight, and ratios represent a weight ratio.

The following materials were used in the Examples:
ultra-high molecular weight polyethylene fiber: purchased from Shandong Aidi Polymer Materials Co., Ltd., having a tensile strength of 3.5GPa, an initial modulus of 120GPa, and an elongation at break of 3.5%;
high strength aramid fiber: para-aramid fiber from Sinochem High Performance Fiber Materials Co., Ltd. under the trade name of ZHAODA HT840D-01, having a tensile strength of 26g/d, an initial modulus of 100GPa, and an elongation at break of 3.5%;
aramid nanofiber: para-aramid nanofiber, prepared from para-aramid fiber from Sinochem High Performance Fiber Materials Co., Ltd. under the trade name of ZHAODA HT840D-01 as raw material by chemical pyrolysis method, having a fiber length of from 50nm to 100nm and a specific surface area of 200m²/g to 250m²/g;
ultra-high molecular weight polyethylene nanofiber: prepared from the aforementioned ultra-high molecular weight polyethylene fiber from Shandong Aidi Polymer Materials Co., Ltd. by chemical pyrolysis method, having a fiber length of from 50nm to 100nm and a specific surface area of from 200m²/g to 250m²/g;
polyurethane emulsion: purchased from Henkel under the trade name of WB8139, in a state of water emulsion, having a viscosity of 400cps, a total solid content of 40wt% (polyurethane resin content of 30wt%, additive content of 10wt%), and a colloidal tensile strength after drying of from 20MPa to 30MPa;
styrene-isoprene-styrene block copolymer (SIS) emulsion: purchased from Henkel under the trade name of B7137, in a state of water emulsion, having a viscosity of 280cps, a solid content of 42wt%, and a colloidal tensile strength after drying of from 15MPa to 25MPa, wherein the segment structure of SIS comprises 15wt% of polystyrene segment and 85wt% of polyisoprene segment.

### Example 1: Preparation of aramid nanofiber composite ultra-high molecular weight polyethylene fiber UD fabric by prepreg treatment with a single-roll arranger and hot-pressing and combining process

4 parts by weight of aramid nanofibers were dispersed into 100 parts by weight of the polyurethane emulsion to form a polyurethane emulsion containing aramid nanofibers. 4 parts by weight of aramid nanofibers were dispersed into 100 parts by weight of deionized water to form an aqueous dispersion of aramid nanofibers. The ultra-high molecular weight polyethylene fiber guiding yarn was neatly spread on the roller by a single-roll arranger, and then subjected to prepreg treatment through an adhesive tank filled with the polyurethane emulsion containing aramid nanofibers. The thickness of the adhesive film was controlled at 0.03mm. The adhesive film was then dried to obtain a 0° unidirectional arrangement layer. The aqueous dispersion of aramid nanofibers was sprayed on the 0° unidirectional arrangement layer with a spraying amount controlled at 4g/m², and then dried. A 90° unidirectional arrangement layer was obtained by cutting and changing direction. Subsequently, 0°/90° hot-pressing and combining was carried out at a temperature of 90°C and a pressure of 0.5MPa, so that a nanofiber composite UD fabric was obtained in Example 1. The UD fabric of Example 1 has a 2-layer structure with 0°/90° arrangement, the structure of which is shown in Fig. 1 and Fig. 3. The angle between the ultra-high molecular weight polyethylene fiber arrangement directions of adjacent two unidirectional sheet layers is 90°, and there is a connection effect of dispersed nanofibers between the unidirectional sheet layers in addition to the adhesive adhesion. According to the total length and the linear density of the high-performance fiber used in the UD fabric, the mass of the high-performance fiber can be calculated. Then, the mass fraction of high-performance fiber in the UD fabric can be calculated by measuring the total mass of the UD fabric. In the UD fabric of Example 1, the mass fraction of ultra-high molecular weight polyethylene fiber is 85% of the UD fabric.

The mass fraction of nanofibers in the adhesive = the mass of nanofibers ÷ (the mass of the emulsion × solid content in the emulsion + the mass of nanofibers). Therefore, in the adhesive of Example 1, the mass fraction of nanofibers is 9.1% of the adhesive.

The mass fraction of nanofibers in the aqueous dispersion of the adhesive= the mass of nanofibers ÷ (the mass of the emulsion+ the mass of nanofibers). Therefore, in the aqueous dispersion of the adhesive of Example 1, the mass fraction of nanofibers is 3.8% of the aqueous dispersion of the adhesive.

The mass fraction of nanofibers in the aqueous dispersion of nanofibers = the mass of nanofibers ÷ (the mass of water + the mass of nanofibers). Therefore, in the aqueous dispersion of nanofibers of Example 1, the mass fraction of nanofibers is 3.8% of the aqueous dispersion of nanofibers.

The amount of nanofibers sprayed on the UD fabric = the mass fraction of nanofibers in the aqueous dispersion of nanofibers × the amount of the aqueous dispersion of nanofibers sprayed on the unidirectional sheet layer × the number of the unidirectional sheet layers comprised in the UD fabric. Therefore, in the UD fabric of Example 1, the amount of nanofibers sprayed on the UD fabric is 0.31g/m². According to the areal density of the UD fabric shown in Table 2, it can be seen that in the UD fabric of Example 1, the mass fraction of the nanofibers sprayed on the UD fabric is 0.24% of the UD fabric, and the mass fraction of the adhesive is 14.76% of the UD fabric.

### Example 2: Preparation of aramid nanofiber composite ultra-high molecular weight polyethylene fiber UD fabric by prepreg treatment with a single-roll arranger and hot-pressing and combining process

7 parts by weight of aramid nanofibers were dispersed into 100 parts by weight of the polyurethane emulsion to form a polyurethane emulsion containing aramid nanofibers. 7 parts by weight of aramid nanofibers were dispersed into 100 parts by weight of deionized water to form an aqueous dispersion of aramid nanofibers. The ultra-high molecular weight polyethylene fiber guiding yarn was neatly spread on the roller by a single-roll arranger, and then subjected to prepreg treatment through an adhesive tank filled with the polyurethane emulsion containing aramid nanofibers. The thickness of the adhesive film was controlled at 0.03mm. The adhesive film was then dried to obtain a 0° unidirectional arrangement layer. The aqueous dispersion of aramid nanofibers was sprayed on the 0° unidirectional arrangement layer with a spraying amount controlled at 4g/m², and then dried. A 90° unidirectional arrangement layer was obtained by cutting and changing direction. Subsequently, 0°/90° hot-pressing and combining was carried out at a temperature of 90°C and a pressure of 0.5MPa, so that a nanofiber composite UD fabric was obtained in Example 2. The UD fabric of Example 2 has a 2-layer structure with 0°/90° arrangement, the structure of which is shown in Fig. 1 and Fig. 3. The angle between the ultra-high molecular weight polyethylene fiber arrangement directions of adjacent two unidirectional sheet layers is 90°, and there is a connection effect of dispersed nanofibers between the unidirectional sheet layers in addition to the adhesive adhesion. In the UD fabric of Example 2, the mass fraction of ultra-high molecular weight polyethylene fiber is 85% of the UD fabric. In the adhesive of Example 2, the mass fraction of nanofibers is 14.9% of the adhesive. In the aqueous dispersion of the adhesive of Example 2, the mass fraction of nanofibers is 6.5% of the aqueous dispersion of the adhesive. In the aqueous dispersion of nanofibers of Example 2, the mass fraction of nanofibers is 6.5% of the aqueous dispersion of nanofibers. In the UD fabric of Example 2, the amount of nanofibers sprayed on the UD fabric is 0.52g/m². According to the areal density of the UD fabric shown in Table 2, in the UD fabric of Example 2, the mass fraction of the nanofibers sprayed on the UD fabric is 0.38% of the UD fabric, and the mass fraction of the adhesive is 14.62% of the UD fabric.

### Example 3: Preparation of aramid nanofiber composite ultra-high molecular weight polyethylene fiber UD fabric by prepreg treatment with a single-roll arranger and hot-pressing and combining process

10 parts by weight of aramid nanofibers were dispersed into 100 parts by weight of the polyurethane emulsion to form a polyurethane emulsion containing aramid nanofibers. 10 parts by weight of aramid nanofibers were dispersed into 100 parts by weight of deionized water to form an aqueous dispersion of aramid nanofibers. The ultra-high molecular weight polyethylene fiber guiding yarn was neatly spread on the roller by a single-roll arranger, and then subjected to prepreg treatment through an adhesive tank filled with the polyurethane emulsion containing aramid nanofibers. The thickness of the adhesive film was controlled at 0.03mm. The adhesive film was then dried to obtain a 0° unidirectional arrangement layer. The aqueous dispersion of aramid nanofibers was sprayed on the 0° unidirectional arrangement layer with a spraying amount controlled at 4g/m², and then dried. A 90° unidirectional arrangement layer was obtained by cutting and changing direction. Subsequently, 0°/90° hot-pressing and combining was carried out at a temperature of 90°C and a pressure of 0.5MPa, so that a nanofiber composite UD fabric was obtained in Example 3. The UD fabric of Example 3 has a 2-layer structure with 0°/90° arrangement, the structure of which is shown in Fig. 1 and Fig. 3. The angle between the ultra-high molecular weight polyethylene fiber arrangement directions of adjacent two unidirectional sheet layers is 90°, and there is a connection effect of dispersed nanofibers between the unidirectional sheet layers in addition to the adhesive adhesion. In the UD fabric of Example 3, the mass fraction of ultra-high molecular weight polyethylene fiber is 85% of the UD fabric. In the adhesive of Example 3, the mass fraction of nanofibers is 20% of the adhesive. In the aqueous dispersion of the adhesive of Example 3, the mass fraction of nanofibers is 9.1% of the aqueous dispersion of the adhesive. In the aqueous dispersion of nanofibers of Example 3, the mass fraction of nanofibers is 9.1% of the aqueous dispersion of nanofibers. In the UD fabric of Example 3, the amount of nanofibers sprayed on the UD fabric is 0.73g/m². According to the areal density of the UD fabric shown in Table 2, in the UD fabric of Example 3, the mass fraction of the nanofibers sprayed on the UD fabric is 0.51% of the UD fabric, and the mass fraction of the adhesive is 14.49% of the UD fabric.

### Example 4: Preparation of aramid nanofiber composite ultra-high molecular weight polyethylene fiber UD fabric by prepreg treatment with a single-roll arranger and hot-pressing and combining process

13 parts by weight of aramid nanofibers were dispersed into 100 parts by weight of the polyurethane emulsion to form a polyurethane emulsion containing aramid nanofibers. 13 parts by weight of aramid nanofibers were dispersed into 100 parts by weight of deionized water to form an aqueous dispersion of aramid nanofibers. The ultra-high molecular weight polyethylene fiber guiding yarn was neatly spread on the roller by a single-roll arranger, and then subjected to prepreg treatment through an adhesive tank filled with the polyurethane emulsion containing aramid nanofibers. The thickness of the adhesive film was controlled at 0.03mm. The adhesive film was then dried to obtain a 0° unidirectional arrangement layer. The aqueous dispersion of aramid nanofibers was sprayed on the 0° unidirectional arrangement layer with a spraying amount controlled at 4g/m², and then dried. A 90° unidirectional arrangement layer was obtained by cutting and changing direction. Subsequently, 0°/90° hot-pressing and combining was carried out at a temperature of 90°C and a pressure of 0.5MPa, so that a nanofiber composite UD fabric was obtained in Example 4. The UD fabric of Example 4 has a 2-layer structure with 0°/90° arrangement, the structure of which is shown in Fig. 1 and Fig. 3. The angle between the ultra-high molecular weight polyethylene fiber arrangement directions of adjacent two unidirectional sheet layers is 90°, and there is a connection effect of dispersed nanofibers between the unidirectional sheet layers in addition to the adhesive adhesion. In the UD fabric of Example 4, the mass fraction of ultra-high molecular weight polyethylene fiber is 85% of the UD fabric. In the adhesive of Example 4, the mass fraction of nanofibers is 24.5% of the adhesive. In the aqueous dispersion of the adhesive of Example 4, the mass fraction of nanofibers is 11.5% of the aqueous dispersion of the adhesive. In the aqueous dispersion of nanofibers of Example 4, the mass fraction of nanofibers is 11.5% of the aqueous dispersion of nanofibers. In the UD fabric of Example 4, the amount of nanofibers sprayed on the UD fabric is 0.92g/m². According to the areal density of the UD fabric shown in Table 2, in the UD fabric of Example 4, the mass fraction of the nanofibers sprayed on the UD fabric is 0.59% of the UD fabric, and the mass fraction of the adhesive is 14.41% of the UD fabric.

### Example 5: Preparation of aramid nanofiber composite ultra-high molecular weight polyethylene fiber UD fabric by prepreg treatment with a single-roll arranger and hot-pressing and combining process

16 parts by weight of aramid nanofibers were dispersed into 100 parts by weight of the polyurethane emulsion to form a polyurethane emulsion containing aramid nanofibers. 16 parts by weight of aramid nanofibers were dispersed into 100 parts by weight of deionized water to form an aqueous dispersion of aramid nanofibers. The ultra-high molecular weight polyethylene fiber guiding yarn was neatly spread on the roller by a single-roll arranger, and then subjected to prepreg treatment through an adhesive tank filled with the polyurethane emulsion containing aramid nanofibers. The thickness of the adhesive film was controlled at 0.03mm. The adhesive film was then dried to obtain a 0° unidirectional arrangement layer. The aqueous dispersion of aramid nanofibers was sprayed on the 0° unidirectional arrangement layer with a spraying amount controlled at 4g/m², and then dried. A 90° unidirectional arrangement layer was obtained by cutting and changing direction. Subsequently, 0°/90° hot-pressing and combining was carried out at a temperature of 90°C and a pressure of 0.5MPa, so that a nanofiber composite UD fabric was obtained in Example 5. The UD fabric of Example 5 has a 2-layer structure with 0°/90° arrangement, the structure of which is shown in Fig. 1 and Fig. 3. The angle between the ultra-high molecular weight polyethylene fiber arrangement directions of adjacent two unidirectional sheet layers is 90°, and there is a connection of dispersed nanofibers between the unidirectional sheet layers in addition to the adhesive adhesion. In the UD fabric of Example 5, the mass fraction of ultra-high molecular weight polyethylene fiber is 85% of the UD fabric. In the adhesive of Example 5, the mass fraction of nanofibers is 28.6% of the adhesive. In the aqueous dispersion of the adhesive of Example 5, the mass fraction of nanofibers is 13.8% of the aqueous dispersion of the adhesive. In the aqueous dispersion of nanofibers of Example 5, the mass fraction of nanofibers is 13.8% of the aqueous dispersion of nanofibers. In the UD fabric of Example 5, the amount of nanofibers sprayed on the UD fabric is 1.10g/m². According to the areal density of the UD fabric shown in Table 2, in the UD fabric of Example 5, the mass fraction of the nanofibers sprayed on the UD fabric is 0.68% of the UD fabric, and the mass fraction of the adhesive is 14.32% of the UD fabric.

### Test Example 1

The strip sample was raveled and cut from the UD fabric having a 2-layer structure of Examples 1-5 in accordance with ASTMD5035 standard, and the tensile test was performed using a universal material testing machine (Instron 5967 from Instron). The sample was taken in warp and weft direction of the UD fabric each 10 times. The strip sample having a width of 40mm and a length of 180mm was stretched in the standard state with instrument testing speed of 250mm/min. The strength test results of the UD fabric strip sample of Example 1-5 in warp and weft direction are shown in Table 1 below.

**Table 1: Tensile test results of the nanofiber composite UD strip sample**

| No. | Sample | Strength in warp direction (KN/4cm) | Strength in weft direction (KN/4cm) |
|---|---|---|---|
| 1 | Ex. 1 | 9.32 | 8.17 |
| 2 | Ex. 2 | 9.45 | 7.93 |
| 3 | Ex. 3 | 10.05 | 8.24 |
| 4 | Ex. 4 | 9.56 | 8.06 |
| 5 | Ex. 5 | 10.11 | 8.45 |

The tensile test results of the strip sample show that the strength in warp direction and the strength in weft direction in the nanofiber composite UD fabrics of Examples 1-5 are not much different. This is because the tensile stress of high-performance fibers and the bonding effect of the adhesive play a major role in the stretching process of UD fabric strip sample. Therefore, the same structural unit plays a major role in each example, so the sample has a macroscopic performance that the strength in warp direction is between 9.3-10.2 KN/4cm and the strength in weft direction is between 7.9-8.5 KN/4cm.

### Test Example 2

The areal density of the UD fabrics having a 2-layer structure of Examples 1-5 was tested and the results are shown in Table 2. The UD fabrics of Examples 1-5 were pressed and made into bulletproof helmets and subjected to a target test. 48 pieces of the UD fabrics having a 2-layer structure of Examples 1-5 were single-sided coated and subjected to scraping treatment, and hot pressed into bulletproof helmets after a prepreg treatment, which were tested using 1. 1gFSP simulated shrapnel gun in accordance with the bulletproof standard NIJ0101.06 for 6 shots in different parts of the bulletproof helmet. The test results are shown in the following Table 2, wherein V50 refers to a bullet speed with a penetration probability of 50%. The V50 value indicates the bulletproof performance. BFS (Back Face Signature) refers to the structural depression created by unpenetrated bullets on the bulletproof article. The lower the BFS value, the better the bulletproof performance.

**Table 2: Areal density of the nanofiber composite UD fabric and the target test results of the UD bulletproof helmet**

| No. | Sample | Areal density (g/m²) | V50 (m/s) | BFS (mm) |
|---|---|---|---|---|
| 1 | Ex. 1 | 127 | 697 | 23 |
| 2 | Ex. 2 | 138 | 703 | 19 |
| 3 | Ex. 3 | 144 | 695 | 13 |
| 4 | Ex. 4 | 156 | 715 | 9 |
| 5 | Ex. 5 | 163 | 681 | 16 |

The test results show that the V50 values of the bulletproof helmets made of Examples 1-5 are greater than 680m/s, and the BFS values are less than 25mm. Ultra-high molecular weight polyethylene fiber has high tensile strength and elastic modulus, and the UD fabric made therefrom has good bulletproof effect. The process of combining with aramid nanofiber can effectively improve the degree of BFS depression of bulletproof articles.

It is found in the present disclosure that the dispersion degree of nanofibers has an important effect on BFS of bulletproof helmets. The sample of Example 4 has a lower BFS value and a higher V50 value than that of Example 5. By observing the macroscopic morphology of the UD fabric of Example 4, it is found that the warp and weft yarns of the UD fabric of Example 4 are uniform and flat, and there is no stack and protrusion on the edge of the UD fabric, indicating that the nanofibers do not undergo local agglomeration in the process of hot pressing and combing, and have a good dispersion degree. It is found in the present disclosure that controlling the mass fraction of nanofibers in the aqueous dispersion of the adhesive and the aqueous dispersion of nanofibers at 13% or less is conducive to obtaining good dispersion and is conducive to improving the bulletproof performance of the article. In particular, when the mass fraction of nanofibers in the aqueous dispersion of the nanofiber-containing adhesive and the aqueous dispersion of nanofibers is controlled at from 10% to 13%, it can improve the bulletproof performance of bulletproof articles to the greatest extent.

### Example 6: Preparation of aramid nanofiber composite high-strength aramid fiber UD fabric by prepreg treatment with a single-roll arranger and hot-pressing and combining process

10 parts by weight of aramid nanofibers were dispersed into 100 parts by weight of the polyurethane emulsion to form a polyurethane emulsion containing aramid nanofibers. 10 parts by weight of aramid nanofibers were dispersed into 100 parts by weight of deionized water to form an aqueous dispersion of aramid nanofibers. The high-strength aramid fiber guiding yarn was neatly spread on the roller by a single-roll arranger, and then subjected to prepreg treatment through an adhesive tank filled with the polyurethane emulsion containing aramid nanofibers. The thickness of the adhesive film was controlled at 0.03mm. The adhesive film was then dried to obtain a 0° unidirectional arrangement layer. The aqueous dispersion of aramid nanofibers was sprayed on the 0° unidirectional arrangement layer with a spraying amount controlled at 4g/m², and then dried. A 90° unidirectional arrangement layer was obtained by cutting and changing direction. Subsequently, 0°/90° hot-pressing and combining was carried out at a temperature of 90°C and a pressure of 0.5MPa, so that a nanofiber composite UD fabric was obtained in Example 6. The UD fabric of Example 6 has a 2-layer structure with 0°/90° arrangement, the structure of which is shown in Fig. 1 and Fig. 3. The angle between the ultra-high molecular weight polyethylene fiber arrangement directions of adjacent two unidirectional sheet layers is 90°, and there is a connection effect of dispersed nanofibers between the unidirectional sheet layers in addition to the adhesive adhesion.

The nanofiber composite UD fabric of Example 6 has an areal density of 200g/m². In the UD fabric of Example 6, the mass fraction of aramid fiber is 85% of the UD fabric. In the adhesive of Example 6, the mass fraction of nanofibers is 20% of the adhesive. In the aqueous dispersion of the adhesive of Example 6, the mass fraction of nanofibers is 9.1% of the aqueous dispersion of the adhesive. In the aqueous dispersion of nanofibers of Example 6, the mass fraction of nanofibers is 9.1% of the aqueous dispersion of nanofibers. In the UD fabric of Example 6, the amount of nanofibers sprayed on the UD fabric is 0.73g/m². According to the areal density of the UD fabric, in the UD fabric of Example 6, the mass fraction of the nanofibers sprayed on the UD fabric is 0.36% of the UD fabric, and the mass fraction of the adhesive is 14.64% of the UD fabric.

### Test Example 3

Using the same method and process as Test Example 2, the nanofiber composite UD fabric of Example 6 was made into a bulletproof helmet and tested in accordance with the same target test standard as Test Example 2. The tested V50 value of the bulletproof helmet made of the nanofiber composite UD fabric of Example 6 is 685m/s, and the BFS value is 10mm. Compared with the nanofiber composite ultra-high molecular weight polyethylene fiber UD fabric (Example 3), the nanofiber composite high-strength aramid fiber UD fabric of Example 6 has a bulletproof performance with lower V50 and BFS value, which is caused by the bulletproof performance difference in different types of high-performance fiber layers.

### Comparative Example 1: Preparation of ultra-high molecular weight polyethylene fiber UD fabric by prepreg treatment with a single-roll arranger and hot-pressing and combining process

The ultra-high molecular weight polyethylene fiber guiding yarn was neatly spread on the roller by a single-roll arranger, and then subjected to prepreg treatment through an adhesive tank filled with the polyurethane emulsion. The thickness of the adhesive film was controlled at 0.03mm. The adhesive film was then dried to obtain a 0° unidirectional arrangement layer. A 90° unidirectional arrangement layer was obtained by cutting and changing direction. 0°/90° hot-pressing and combining was carried out at a temperature of 90°C and a pressure of 0.5MPa, so that a nanofiber composite UD fabric was obtained in Comparative Example 1. The UD fabric of Comparative Example 1 has a 2-layer structure with 0°/90° arrangement.

### Comparative Example 2: Preparation of ultra-high molecular weight polyethylene nanofiber composite ultra-high molecular weight polyethylene fiber UD fabric by prepreg treatment with a single-roll arranger and hot-pressing and combining process

10 parts by weight of ultra-high molecular weight polyethylene nanofibers were dispersed into 100 parts by weight of the polyurethane emulsion to form a polyurethane emulsion containing ultra-high molecular weight polyethylene nanofibers. 10 parts by weight of ultra-high molecular weight polyethylene nanofibers were dispersed into 100 parts by weight of deionized water to form an aqueous dispersion of ultra-high molecular weight polyethylene nanofibers. The ultra-high molecular weight polyethylene fiber guiding yarn was neatly spread on the roller by a single-roll arranger, and then subjected to prepreg treatment through an adhesive tank filled with the polyurethane emulsion containing ultra-high molecular weight polyethylene nanofibers. The thickness of the adhesive film was controlled at 0.03mm. The adhesive film was then dried to obtain a 0° unidirectional arrangement layer. The aqueous dispersion of ultra-high molecular weight polyethylene fibers was sprayed on the 0° unidirectional arrangement layer with a spraying amount controlled at 4g/m², and then dried. A 90° unidirectional arrangement layer was obtained by cutting and changing direction. Subsequently, 0°/90° hot-pressing and combining was carried out at a temperature of 90°C and a pressure of 0.5MPa, so that a nanofiber composite UD fabric was obtained in Comparative Example 2. The UD fabric of Comparative Example 2 has a 2-layer structure with 0°/90° arrangement.

### Test Example 4

The areal density of the UD fabric having a 2-layer structure of Comparative Example 1 and that of the nanofiber composite UD fabric having a 2-layer structure of Comparative Example 2 were tested, and the results are shown in Table 3. Using the same helmet pressing method as Test Example 2, the UD fabric of Comparative Example 1 and the nanofiber composite UD fabric of Comparative Example 2 were made into bulletproof helmets, and the target test was carried out using the same target test standard as Test Example 2. The results are shown in Table 3 below.

**Table 3: Areal density of the UD fabric and the target testing results of the UD bulletproof helmet**

| No. | Sample | Areal density (g/m²) | V50 (m/s) | BFS (mm) |
|---|---|---|---|---|
| 1 | Com. Ex. 1 | 135 | 678 | 24 |
| 2 | Com. Ex. 2 | 139 | 671 | 23 |

The test results show that the bulletproof helmet made of UD fabric (Comparative Example 1) without aramid nanofibers may cause damage to the human body due to excessive BFS values. The bulletproof helmet made of UD fabric prepared from polyurethane emulsion and aqueous dispersion containing 10wt% ultra-high molecular weight polyethylene nanofibers (Comparative Example 2) has lower bulletproof performance than that made of UD fabric using aramid nanofibers, and does not have significantly improved bulletproof performance compared with UD fabric without aramid nanofibers. This is because ultra-high molecular weight polyethylene nanofibers do not have rigid segments as that comprised in aramid nanofibers, and are prone to longitudinal slippage between molecular chains. It cannot effectively play a role of interface modifying and connecting unidirectional sheet layers and thus cannot meet the rigid requirement of bulletproof helmets.

### Example 7: Preparation of aramid nanofiber composite ultra-high molecular weight polyethylene fiber UD fabric by prepreg treatment with a single-roll arranger and hot-pressing and combining process

10 parts by weight of aramid nanofibers were dispersed into 100 parts by weight of SIS emulsion to form a SIS emulsion containing aramid nanofibers. 10 parts by weight of aramid nanofibers were dispersed into 100 parts by weight of deionized water to form an aqueous dispersion of aramid nanofibers. The ultra-high molecular weight polyethylene fiber guiding yarn was neatly spread on the roller by a single-roll arranger, and then subjected to prepreg treatment through an adhesive tank filled with the SIS emulsion containing aramid nanofibers. The thickness of the adhesive film was controlled at 0.03mm. The adhesive film was then dried to obtain a 0° unidirectional arrangement layer. The aqueous dispersion of aramid nanofibers was sprayed on the 0° unidirectional arrangement layer with a spraying amount controlled at 4g/m², and then dried. A 90° unidirectional arrangement layer was obtained by cutting and changing direction. Subsequently, 0°/90° hot-pressing and combining was carried out at a temperature of 90°C and a pressure of 0.5MPa, so that a nanofiber composite UD fabric was obtained in Example 7. The UD fabric of Example 7 had a 2-layer structure with 0°/90° arrangement, the structure of which was shown in Fig. 1 and Fig. 3. The angle between the ultra-high molecular weight polyethylene fiber arrangement directions of adjacent two unidirectional sheet layers was 90°, and there was a connection effect of dispersed nanofibers between the unidirectional sheet layers in addition to the adhesive adhesion.

The nanofiber composite UD fabric of Example 7 has an areal density of 155g/m². In the UD fabric of Example 7, the mass fraction of ultra-high molecular weight polyethylene fiber was 85% of the UD fabric. In the adhesive of Example 7, the mass fraction of nanofibers is 19.2% of the adhesive. In the aqueous dispersion of the adhesive of Example 7, the mass fraction of nanofibers is 9.1% of the aqueous dispersion of the adhesive. In the aqueous dispersion of nanofibers of Example 7, the mass fraction of nanofibers is 9.1% of the aqueous dispersion of nanofibers. In the UD fabric of Example 7, the amount of nanofibers sprayed on the UD fabric is 0.73g/m². According to the areal density of the UD fabric, in the UD fabric of Example 7, the mass fraction of the nanofibers sprayed on the UD fabric is 0.47% of the UD fabric, and the mass fraction of the adhesive is 14.53% of the UD fabric.

### Test Example 5

The areal density of the UD fabric having a 2-layer structure of Example 7 was tested, and the results are shown in Table 5. The UD fabric of Example 7 was pressed and made into a bulletproof helmet and subjected to a target test. 48 pieces of the UD fabric having a 2-layer structure of Example 7 were single-sided coated and subjected to scraping treatment, and hot pressed into a bulletproof helmet after a prepreg treatment, which was tested using 1.1gFSP simulated shrapnel gun in accordance with the bulletproof standard NIJ0101.06 for 6 shots in different parts of the bulletproof helmet. The test results are shown in Table 5 below.

**Table 5: Areal density of the nanofiber composite UD fabric and the target testing results of the UD bulletproof helmet**

| No. | Sample | Areal density (g/m²) | V50 (m/s) | BFS (mm) |
|---|---|---|---|---|
| 1 | Ex. 7 | 155 | 645 | 20 |

### Comparative Example 3

The ultra-high molecular weight polyethylene fiber guiding yarn was neatly spread on the roller by a single-roll arranger, and then subjected to prepreg treatment through an adhesive tank filled with SIS emulsion. The thickness of the adhesive film was controlled at 0.03mm. The adhesive film was then dried to obtain a 0° unidirectional arrangement layer. A 90° unidirectional arrangement layer was obtained by cutting and changing direction. 0°/90° hot-pressing and combining was carried out at a temperature of 90°C and a pressure of 0.5MPa, so that a UD fabric was obtained in Comparative Example 3. The UD fabric of Comparative Example 3 has a 2-layer structure with 0°/90° arrangement.

### Test Example 6

The areal density of the UD fabric having a 2-layer structure of Comparative Example 3 was tested, and the results are shown in Table 6. Using the same helmet pressing method as Test Example 5, the UD fabric of Comparative Example 3 was made into a bulletproof helmet, and the target test was carried out using the same target test standard as Test Example 5. The test results are shown in Table 6 below.

**Table 6: Areal density of the UD fabric and the target testing results of the bulletproof helmet**

| No. | Sample | Areal density (g/m²) | V50 (m/s) | BFS (mm) |
|---|---|---|---|---|
| 1 | Com. Ex. 3 | 149 | 630 | 24 |

The test results show that the choice of resin has a great impact on the protective performance of the nanofiber composite unidirectional fabric of the present disclosure. Compared with polyurethane emulsion, since there is only 15wt% of rigid polystyrene segment and 85wt% of flexible polyisoprene segment in the molecular segment of SIS emulsion, its corresponding UD fabric is more suitable for soft protection, such as body armor. Since polyurethane has a higher crosslinking degree, its corresponding UD fabric is more suitable for hard protection, such as bulletproof helmets, bulletproof plates. Under the same areal density, the bulletproof performance of UD fabric prepared using polyurethane as the adhesive resin matrix of the present disclosure is better than that of the UD fabric prepared using SIS as the adhesive resin matrix. However, as a flexible material, the UD fabric prepared using SIS as the adhesive resin matrix of the present disclosure provides significantly improved bulletproof performance compared with the existing flexible protective materials, and has a very good application prospect in soft protection. With different resin systems, all bulletproof helmets combined with para-aramid nanofibers have improved bulletproof performance.

Although the above specific embodiments are explained and described in detail in accordance with the preferred technical solution of the present disclosure, the improvement or modification based on the present disclosure falls within the scope of the present application in equivalency. Therefore, it should be understood that the present disclosure is not limited to the disclosed embodiments, and the above claims are within the protection scope claimed by the present disclosure.

## Claims

1. A nanofiber composite unidirectional fabric, which comprises at least two unidirectional sheet layers and nanofibers located between adjacent unidirectional sheet layers, wherein the unidirectional sheet layer comprises high-performance fibers in unidirectional arrangement and an adhesive, wherein the adhesive comprises nanofibers.

2. The nanofiber composite unidirectional fabric according to claim 1, wherein the nanofiber composite unidirectional fabric has one or more of the following characteristics:
the angle between the high-performance fiber arrangement directions of two adjacent unidirectional sheet layers is 90±10°;
the mass of the high-performance fiber accounts for from 70% to 90% of the total mass of the nanofiber composite unidirectional fabric;
the mass of the adhesive accounts for from 14.32% to 14.76% of the total mass of the nanofiber composite unidirectional fabric;
the mass of the nanofibers located between adjacent unidirectional sheet layers accounts for from 0.24% to 0.68% of the total mass of the nanofiber composite unidirectional fabric;
when the nanofiber composite unidirectional fabric comprises two unidirectional sheet layers, the areal density is from 70g/m² to 350g/m², preferably from 100g/m² to 300g/m², more preferably from 120g/m² to 250g/m²;
in the adhesive, the mass fraction of the nanofiber is from 5% to 50%, preferably from 5% to 30%, more preferably from 14% to 30% of the adhesive;
the high-performance fiber is a fiber having a tensile strength greater than or equal to 20g/d, and an initial modulus greater than or equal to 40GPa.

3. The nanofiber composite unidirectional fabric according to claim 1, wherein the high-performance fiber is one or more selected from the group consisting of ultra-high molecular weight polyethylene fibers, aramid fibers, polyimide fibers, and poly(p-phenylene benzobisoxazole) fibers, preferably an ultra-high molecular weight polyethylene fiber and/or an aramid fiber, more preferably an ultra-high molecular weight polyethylene fiber and/or a para-aramid fiber; and/or the high-performance fiber has a tensile strength of greater than or equal to 1.8GPa, an initial modulus of from 85GPa to 170GPa, and an elongation at break of greater than or equal to 3.5%.

4. The nanofiber composite unidirectional fabric according to claim 1, wherein the nanofiber is an aramid nanofiber, preferably a para-aramid nanofiber; and/or the nanofiber has a fiber length of from 50nm to 100nm, and a specific surface area of from 50m²/g to 500m²/g.

5. The nanofiber composite unidirectional fabric according to claim 1, wherein
the adhesive comprises a resin matrix, wherein the resin matrix is one or more selected from the group consisting of polyurethane, styrene block copolymer and polyacrylate, preferably a polyurethane or a styrene block copolymer; preferably, the resin matrix is a styrene-isoprene-styrene block copolymer; and/or
the resin matrix has a tensile strength of from 15MPa to 40MPa.

6. The nanofiber composite unidirectional fabric according to claim 1, wherein the nanofiber composite unidirectional fabric has one or more of the following characteristics:
the mass fraction of resin matrix in the adhesive is from 30% to 80%, preferably from 40% to 80%;
the mass ratio of the resin matrix and the nanofiber in the adhesive is 1: (0.1-1), preferably 1: (0.1-0.6);
the adhesive further comprises an additive, preferably the mass fraction of the additive does not exceed 25% of the adhesive.

7. A method for preparing a nanofiber composite unidirectional fabric, which comprises the following steps:
(1) preparing a unidirectional sheet layer comprising high-performance fibers in unidirectional arrangement and an adhesive, wherein the adhesive comprises nanofibers;
(2) spraying an aqueous dispersion of nanofibers on the unidirectional sheet layer, drying and then laminating the unidirectional sheet layers;
(3) hot pressing and combing the laminated unidirectional sheet layers to obtain a nanofiber composite unidirectional fabric.

8. The method according to claim 7, wherein the method has one or more of the following characteristics:
in step (1), the aqueous dispersion of the adhesive is adhered to the high-performance fibers in unidirectional arrangement, and dried to obtain a unidirectional sheet layer; preferably, in the aqueous dispersion of the adhesive, the mass ratio of water to solid component other than nanofibers is from 7:3 to 4:6, preferably from 7:3 to 5:5; preferably, the thickness of the aqueous dispersion of the adhesive adhered to the high-performance fibers in unidirectional arrangement is from 0.01mm to 0.1mm;
in step (2), the aqueous dispersion of nanofibers is sprayed between two adjacent unidirectional sheet layers in an amount of from 1g/m² to 10g/m²;
in step (2), during lamination, the angle between the high-performance fiber arrangement directions of two adjacent unidirectional sheet layers is 90±10°;
in step (3), the hot-pressing temperature is from 70°C to 120°C, and the hot-pressing pressure is from 0.1MPa to 2MPa.

9. The method according to claim 7, wherein the method has the following characteristics:
in step (1), the aqueous dispersion of the adhesive is adhered to the high-performance fibers in unidirectional arrangement, and dried to obtain a unidirectional sheet layer, wherein the high-performance fiber is an ultra-high molecular weight polyethylene fiber, wherein the nanofiber is a para-aramid nanofiber, wherein the mass fraction of the nanofiber in the aqueous dispersion of the adhesive is from 2% to 20%, preferably from 2% to 15%, and more preferably from 10% to 13%, of the aqueous dispersion of the adhesive, and the thickness of the aqueous dispersion of the adhesive adhered to the high-performance fibers in unidirectional arrangement is from 0.01mm to 0.05mm;
in step (2), the aqueous dispersion of nanofibers is sprayed between the adjacent two unidirectional sheet layers in a spraying amount of from 1g/m² to 5g/m², wherein in the aqueous dispersion of nanofibers, the mass fraction of the nanofiber is from 2% to 20%, preferably from 2% to 15%, and more preferably from 10% to 13%, of the aqueous dispersion of nanofibers, wherein during lamination, the angle between the high-performance fiber arrangement directions of two adjacent unidirectional sheet layers is 90±10°; and
in step (3), the hot-pressing temperature is from 70°C to 120°C and the hot-pressing pressure is from 0.1MPa to 2MPa.

10. A nanofiber composite unidirectional fabric prepared by the method according to any one of claims 7-9;
preferably, the nanofiber composite unidirectional fabric is the nanofiber composite unidirectional fabric according to any one of claims 1-6.

11. An aqueous dispersion of an adhesive comprising a resin matrix, nanofibers, water, and optional additives;
preferably, the aqueous dispersion of the adhesive has one or more of the following characteristics:
in the aqueous dispersion of the adhesive, the mass ratio of water to the solid component other than nanofibers is from 7:3 to 4:6, preferably from 7:3 to 5:5;
the resin matrix is one or more selected from the group consisting of polyurethanes, styrene block copolymers and polyacrylates, preferably a polyurethane or preferably a styrene block copolymer; preferably, the resin matrix is a styrene-isoprene-styrene block copolymer;
the resin matrix has a tensile strength of from 15MPa to 40MPa;
in the aqueous dispersion of the adhesive, the mass fraction of the resin matrix is from 30% to 80%, preferably from 40% to 80% of the solid component in the aqueous dispersion of the adhesive;
the nanofiber is an aramid nanofiber, preferably a para-aramid nanofiber;
the nanofiber has a fiber length of from 50nm to 100nm, and a specific surface area of from 50m²/g to 500m²/g;
in the aqueous dispersion of the adhesive, the mass fraction of the nanofibers is from 5% to 50%, preferably from 5% to 30%, more preferably from 14% to 30% of the solid component in the aqueous dispersion of the adhesive;
in the aqueous dispersion of the adhesive, the mass ratio of the resin matrix and the nanofibers is 1: (0.1-1), preferably 1: (0.1-0.6);
in the aqueous dispersion of the adhesive, the mass fraction of the additive does not exceed 25% of the solid component in the aqueous dispersion of the adhesive.

12. Use of the aqueous dispersion of the adhesive according to claim 11 in the preparation of a unidirectional fabric or the enhancement of bulletproof performance of a unidirectional fabric.

13. Use of an aqueous dispersion of nanofibers in the preparation of a unidirectional fabric or the enhancement of bulletproof performance of a unidirectional fabric;
preferably, the aqueous dispersion of nanofibers has one or more of the following characteristics:
the nanofiber is an aramid nanofiber, preferably a para-aramid nanofiber;
the nanofiber has a fiber length of from 50nm to 100nm and a specific surface area of from 50m²/g to 500m²/g;
in the aqueous dispersion of nanofibers, the mass fraction of nanofibers is from 2% to 20%, preferably from 2% to 15%, more preferably from 10% to 13% of the aqueous dispersion of nanofibers.

14. A bulletproof article comprising the nanofiber composite unidirectional fabric according to any one of claims 1-6 and 10; preferably, the bulletproof article comprises a body armor, a bulletproof insert and a bulletproof helmet.

15. A unidirectional sheet layer comprising high-performance fibers in unidirectional arrangement and an adhesive, wherein the adhesive comprises nanofibers, wherein there are nanofibers on the surface of the unidirectional sheet layer;
preferably, the high-performance fibers, the adhesive or the nanofibers are as defined in any one of claims 2-6.

16. A method for preparing a unidirectional sheet layer, which comprises the following steps:
(1) preparing a unidirectional sheet layer comprising high-performance fibers in unidirectional arrangement and an adhesive, wherein the adhesive comprises nanofibers;
(2) spraying an aqueous dispersion of nanofibers on the unidirectional sheet layer and drying;
preferably, the step (1) is as defined in the step (1) of claim 8 or 9;
preferably, the step (2) is as defined in the step (2) of claim 8 or 9.

17. A unidirectional sheet layer prepared by the method according to claim 16; preferably, the unidirectional sheet layer is the unidirectional sheet layer according to claim 15.
